# DEMANDE DE BREVET EUROPEEN

(11) **EP 1 707 054 A1**
(43) Date de publication de la demande: **04.10.2006**
(21) Numéro de dépôt: 06300307.3
(22) Date de dépôt: 30.03.2006
(51) Int. Cl.: A21D 2/26, A21D 2/36, A21D 13/06

(54) **Procédé de préparation d'un produit de boulangerie dietetique, produit obtenu**

(30) Priorité: 01.04.2005 FR 0550856
(71) Demandeur: Sedze, Roland, 20301 Irun (ES)
(72) Inventeur: Sedze, Roland, 20301 Irun (ES)
(74) Mandataire: Fantin, Laurent

(57) **Abrégé**

L'objet de l'invention est un procédé de préparation d'un pâton susceptible d'être cuit pour donner un produit alimentaire diététique, caractérisé en ce qu'il consiste à mélanger :
- de la farine dure, de préférence enrichie en gluten,
- des protéines de lait, de préférence à indice chimique supérieur à 80, et
- des fibres insolubles, de préférence des isolats de fibres de blé.

## Description

La présente invention se rapporte à un procédé de préparation d'un pâton pour la fabrication d'un produit diététique, et au pâton obtenu.

L'invention couvre également un procédé de fabrication d'un produit à partir de ce pâton et le produit alimentaire diététique obtenu, susceptible de constituer un repas à lui seul.

Riche en substances de charges, le pain fait partie des produits généralement proscris des régimes alimentaires hypocaloriques tels que ceux pratiqués par les personnes visant à contrôler leur poids.

Néanmoins, la consommation de pain est inscrite dans nos habitudes alimentaires et il existe une demande croissante pour des produits de boulangerie ayant une basse teneur en calories, pouvant être consommés dans le cadre d'un régime amincissant.

Pour répondre à ce besoin, on a vu apparaître des produits de boulangerie de qualités spéciales, pauvres en calories, avec divers aspects et compositions.

Ces produits, caractérisés par une faible présence de lipides et de glucides et par une teneur importante en protéines, sont toutefois peu rassasiants et souvent carencés en éléments nécessaires à une alimentation équilibrée, si bien qu'ils viennent s'ajouter au régime alimentaire quotidien et ne favorisent pas la perte de poids.

En matière de régime alimentaire amincissant, on a mis au point des produits diététiques susceptibles de constituer un repas complet à eux seuls, répondant aux dispositions de l'arrêté du 4 mai 1998 relatif aux substituts de repas. Ces derniers sont capables de mettre le corps en manque de calories tout en assurant les apports nécessaires en protéines, vitamines, sels minéraux, glucides et acides gras essentiels sans risque de carence.

Toutefois, ces produits sont généralement peu appétissants.

Une autre problématique est liée au conditionnement de ces produits. En effet, pour pouvoir être économiquement viables, ils doivent avoir des formes et des volumes sensiblement constants afin de permettre leur conditionnement.

Pour répondre à cette demande, il est possible d'utiliser des moules qui permettent de fabriquer des produits reproductibles. Néanmoins, une telle alternative entraîne des étapes de fabrication supplémentaires qui augmentent le coût de production, et ne permet pas d'obtenir un produit à l'aspect artisanal proche d'un produit de boulangerie.

Aussi, la présente invention vise à résoudre les problèmes de l'art antérieur, en proposant un produit alimentaire amincissant dont l'aspect et le goût se rapprochent de ceux du pain, de forme régulière et reproductible.

A cet effet, l'invention a pour objet un procédé de préparation d'un pâton susceptible d'être cuit pour donner un produit alimentaire diététique, caractérisé en ce que ledit pâton contient trois éléments essentiels, à savoir :
- de la farine dure, préférentiellement enrichie en gluten,
- des protéines de lait, préférentiellement des protéines de lait à indice chimique supérieur à 80, et
- des fibres insolubles, préférentiellement des isolats de fibres de blé.

Selon l'invention, la farine dure se substitue à la farine classiquement utilisée en boulangerie et présente l'intérêt d'être riche en protéines et pauvre en glucides. Dans le produit fini selon l'invention la farine est présente en faible quantité par rapport à celle utilisée pour les produits de boulangerie traditionnels.

Les protéines de lait, utilisées pour supplémenter le pain en calories d'origine protéique, jouent un rôle particulièrement important pour le gonflement du produit pendant la cuisson, et sont donc impliquées dans la régularité et la reproductibilité de la forme du produit fini. Elles sont capables d'absorber une grande quantité d'eau pendant l'étape de fermentation, puis de libérer cette eau au moment de la cuisson.

C'est le cas également des fibres insolubles qui peuvent absorber jusqu'à 350 fois leur poids en eau.

La libération d'eau permet une levée uniforme des pâtons, d'une certaine hauteur, avec un étalement du pâton à sa base.

Les protéines de lait et les fibres insolubles permettent donc de gonfler le produit d'une certaine manière et de façon reproductible. Pour un poids donné, le produit fini obtenu selon l'invention présentera une base toujours du même diamètre sur une même hauteur. A titre d'exemple, un produit de 100g obtenu selon la présente invention aura toujours une base de 10 cm de diamètre et une hauteur de 5,5 cm.

Selon une autre caractéristique de l'invention, le pâton contient également des sels minéraux, notamment du bicarbonate de potassium qui a un effet synergique sur l'action des protéines de lait et des fibres insolubles.

Selon l'invention, le pâton est aussi susceptible de comporter des inclusions, telles que par exemple des pépites de chocolat, de fruits, des légumes ou encore du fromage ou de la viande, qui, outre leur participation à l'aspect gustatif du produit fini, sont capables de libérer de l'eau au moment de la cuisson et ont donc aussi un impact sur la forme finale du produit.

La libération d'eau pendant la cuisson par les protéines de lait et les fibres insolubles permet également de chauffer le pâton à une température beaucoup plus basse qu'un pain traditionnel. Ainsi, les vitamines, sensibles à la chaleur, sont préservées dans le produit fini.

De préférence, le pâton selon l'invention contient aussi de la levure désactivée, telle que l'invertase réduite, qui permet de lever la pâte rapidement et efficacement au moment de la cuisson sans dégrader les agents de charge peu caloriques présents dans le produit.

La présente invention se rapporte également au produit fini obtenu par un procédé de cuisson particulier du pâton. Un tel procédé permet une diffusion régulière de la chaleur à l'intérieur de la pâte de façon à obtenir un produit homogène, bien hydraté, légèrement doré et sans croûte.

Ainsi le produit fini obtenu selon l'invention possède une forme industrielle reproductible, qui facilite son conditionnement.

La présente invention vise donc un produit alimentaire qui se rapproche du pain, susceptible de s'intégrer dans un régime alimentaire hypocalorique, capable d'apaiser la sensation de faim à long terme tout en assurant les apports nécessaires en éléments essentiels, de forme régulière reproductible particulièrement adaptée à un emballage industriel.

Avantageusement, le produit alimentaire obtenu selon l'invention est moelleux et fondant en bouche, notamment grâce à la présence dans le pâton d'huiles, de sucre, de beurre et de lait écrémé.

De manière à obtenir un produit alimentaire équilibré, la pâte est également supplémentée en vitamines et/ou magnésium, calcium et potassium, et/ou en fibres bifidogènes, selon les normes établies par l'arrêté du 4 mai 1998.

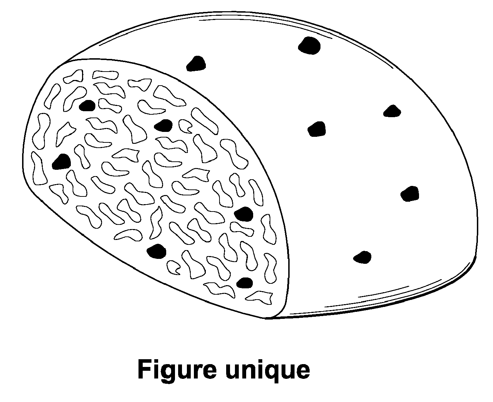

D'autres caractéristiques et avantages ressortiront de la description qui va suivre de l'invention, description donnée à titre d'exemple uniquement, en regard de la figure 1 annexée qui représente un produit alimentaire diététique obtenu selon l'invention après cuisson.

### 1/ INGREDIENTS

La pâte selon la présente invention contient les ingrédients suivants :
- entre 25 et 35 % de farine dure, de préférence entre 27 et 30% de farine enrichie en gluten,
- entre 5 et 15% de protéines de lait, de préférence entre 8 et 9% de protéines de lait à indice chimique supérieur à 80,
- entre 0,5 et 5% de fibres insolubles, préférentiellement entre 1 et 2% d'isolats de fibres de blé, de préférence purs à 90% (90% minimum de fibres),
- entre 0 et 10% d'inclusions, de préférence 6%,
- entre 0 et 5% d'huile végétale, de préférence entre 2 et 3%,
- entre 0 et 5% de sucre, de préférence entre 2 et 3%,
- entre 0 et 5% de beurre, de préférence entre 0,5 et 1%,
- entre 0 et 10% de lait écrémé, de préférence entre 5 et 6%,
- entre 0 et 5% d'émulsionnant, de préférence entre 0,5 et 1%,
- entre 0 et 5% de levure, de préférence entre 2 et 2,5% d'invertase réduite,
- entre 0 et 2% de sel marin, de préférence entre 1 et 1,5%,
- entre 0 et 0,5% d'anti-oxygène, de préférence entre 0,1 et 0,2%,
- entre 0 et 5% d'oligo-éléments et de sels minéraux, de préférence entre 2 et 2,5%,
- entre 0 et 1% de mélange de vitamines, de préférence entre 0,02 et 0,05%,
- entre 0 et 2% d'aromes, de préférence entre 0,5 et 1%, et
- entre 30 et 45% d'eau, de préférence entre 33 et 35%.

A titre d'exemple, on peut citer plusieurs types d'inclusions susceptibles d'être intégrées dans le pâton selon l'invention, à savoir des pépites de chocolat, d'abricot, de mangue, de framboise, ou encore de chorizo, de jambon, de bacon, de roquefort ou de tomates.

### 2/ PROCEDE DE PREPAPRATION DE LA PATE

Le procédé de préparation du pâton selon l' invention comprend la succession des étapes suivantes :
- préparation d'une première composition (A), qui consiste à mélanger de la farine dure, des protéines de lait, du lait écrémé et des matières grasses, à faible vitesse pendant deux à trois minutes,
- préparation d'une composition (B), qui consiste à mélanger de la levure dans de l'eau à 40°C, à faible vitesse pendant deux à trois minutes,
- préparation d'une composition (C), qui consiste à mélanger des sels minéraux et des vitamines dans de l'eau à 40°C, à faible vitesse pendant deux à trois minutes,
- préparation d'une composition (D), qui consiste à mélanger des arômes et des conservateurs dans de l'eau à 40°C, à faible vitesse pendant deux à trois minutes, et
- mélange des compositions A, B, C, D et des inclusions à 30-32°C à faible vitesse pendant deux minutes, puis à vitesse élevée pendant 10 minutes.

En variante, il est possible de mélanger tous les ingrédients en une seule étape.

La pâte ainsi obtenue est basée sur des proportions farine/eau qui diffèrent fortement des pâtes traditionnelles. Un pain classique est basé sur une proportion d'eau à ajouter à la base farine qui est de l'ordre de 100g de farine pour 60g d'eau, alors que la pâte obtenue selon la présente invention, pour 100g de farine absorbe 125g d'eau, et ceci notamment grâce à la présence à la fois de protéines de lait et de fibres insolubles.

### 3/ ETAPE DE FERMENTATION ET DE CUISSON DE LA PATE

Après obtention de la pâte selon l'invention, il est possible de la laisser reposer pendant 20 minutes à température supérieure à 28°C, et à 60% d'humidité relative.

La pâte obtenue selon l'invention, avant d'être cuite pour donner le produit alimentaire directement consommable, doit subir une étape de fermentation.

Cette étape consiste à laisser fermenter la pâte pendant une heure dans une chambre de fermentation à 35°C, et à 85% d'humidité relative.

Après fermentation, le pâton subit une étape de cuisson.

Le procédé de cuisson selon l'invention consiste à disposer, pendant 20 minutes la pâte obtenue par la mise en oeuvre du procédé de préparation selon la présente invention dans un four à sole préchauffé à 130-140°C.

Avantageusement, le produit alimentaire diététique obtenu après cuisson est un produit hyperprotéiné dont la valeur biologique de la protéine a un indice chimique supérieur à 80.

### 4/ ETAPE DE CONDITIONNEMENT

Le produit alimentaire diététique obtenu selon l'invention possède une forme qui facilite son conditionnement.

Le produit fini peut être conditionné dans un sachet plastique par exemple un sac commercialisé sous la dénomination "Doy-pack" (marque déposée).

A titre d'exemple, pour un produit alimentaire selon l'invention de 100g, un emballage particulièrement adapté est un emballage de dimensions 160mm de large, sur 200mm de haut. Les quantités fabriquées peuvent être adaptées de manière à ce que les dimensions du produit fini soient proportionnelles à celle de l'emballage.

Si les paramètres de formulation et les temps de cuisson ne sont pas respectés, les pains sont trop petits ou trop gros pour les emballages prévus.

De préférence le produit obtenu selon l'invention, est conditionné dans un emballage dont on a retiré l'oxygène et auquel on a ajouté un gaz neutre, de manière à éviter une oxydation du produit.

## Revendications

1. Procédé de préparation d'un pâton susceptible d'être cuit pour donner un produit alimentaire diététique, **caractérisé en ce qu'**il consiste à mélanger :
- entre 25 et 35 % de farine dure, de préférence enrichie en gluten,
- des protéines de lait, de préférence à indice chimique supérieur à 80, et
- entre 0,5 et 5% de fibres insolubles, de préférence des isolats de fibres de blé.

2. Procédé de préparation selon la revendication 1, **caractérisé en ce qu'**il consiste à mélanger :
- entre 27 et 30% de farine enrichie en gluten,
- entre 5 et 15% de protéines de lait, de préférence entre 8 et 9% de protéines de lait à indice chimique supérieur à 80, et
- entre 1 et 2% d'isolats de fibres de blé à 90% minimum de fibres.

3. Procédé de préparation selon la revendication 1 ou 2, **caractérisé en ce que** le pâton contient du bicarbonate de potassium.

4. Procédé de préparation selon l'une quelconque des revendications précédentes, **caractérisé en ce que** le pâton contient de la levure désactivée, de préférence entre 2 et 2,5% d'invertase réduite.

5. Procédé de préparation selon l'une quelconque des revendications précédentes, **caractérisé en ce que** le pâton contient des inclusions.

6. Pâton obtenu par la mise en oeuvre du procédé selon l'une quelconque des revendications 1 à 5, **caractérisé en ce qu'**il contient :
- entre 25 et 35 % de farine dure, de préférence enrichie en gluten,
- des protéines de lait, de préférence à indice chimique supérieur à 80, et
- entre 0,5 et 5% de fibres insolubles, de préférence des isolats de fibres de blé.

7. Procédé de fabrication d'un produit alimentaire diététique à partir du pâton obtenu par la mise en oeuvre du procédé selon l'une des revendications 1 à 5, **caractérisé en ce qu'**il comprend :
- une étape de repos du pâton,
- une étape de fermentation du pâton, et
- une étape de cuisson du pâton pendant 20 minutes dans un four à sole préchauffé à 130-140°C.

8. Procédé de fabrication selon la revendication 7, **caractérisé en ce que** l'étape de repos consiste à laisser reposer le pâton pendant 20 minutes à température supérieure à 28°C, et à 60% d'humidité relative.

9. Procédé de fabrication selon l'une des revendications 7 ou 8, **caractérisé en ce que** l'étape de fermentation consiste à laisser fermenter le pâton pendant une heure dans une chambre de fermentation à 35°C, et à 85% d'humidité relative.

10. Produit alimentaire diététique obtenu par la mise en oeuvre du procédé de fabrication selon l'une quelconque des revendications 7 à 9, **caractérisé en ce qu'**il contient :
- entre 25 et 35 % de farine dure, de préférence enrichie en gluten,
- des protéines de lait, de préférence à indice chimique supérieur à 80, et
- entre 0,5 et 5% de fibres insolubles, de préférence des isolats de fibres de blé.
